Europäisches Patentamt

European Patent Office

Office européen des brevets

(19)

(11) Numéro de publication: **0 042 795 B1**

(12) **FASCICULE DE BREVET EUROPEEN**

(45) Date de publication du fascicule du brevet:
**29.10.86**

(51) Int. Cl.⁴: **F 24 D 11/02**

(21) Numéro de dépôt: **81400986.6**

(22) Date de dépôt: **19.06.81**

(54) Installation de fourniture d'eau chaude comprenant un circuit thermodynamique.

(30) Priorité: **20.06.80 FR 8013831**

(43) Date de publication de la demande:
**30.12.81 Bulletin 81/52**

(45) Mention de la délivrance du brevet:
**29.10.86 Bulletin 86/44**

(84) Etats contractants désignés:
**BE CH DE FR GB IT LI NL SE**

(56) Documents cités:
**EP - A - 0 004 552**
**DE - A - 1 501 180**
**DE - A - 2 649 872**
**FR - A - 2 439 371**
**FR - A - 2 439 954**
**GB - A - 652 215**
**US - A - 2 876 630**
**US - A - 4 141 222**
**US - A - 4 142 379**

(73) Titulaire: **ELECTRICITE DE FRANCE Service National, 2, rue Louis Murat, F-75008 Paris (FR)**

(72) Inventeur: **Chapelle, Jules Antoine, 4, Chemin du Merisier Noir, F-91400 Orsay (FR)**
Inventeur: **Levacher, Jean-Pierre, 1 à 5, Avenue Jean-Jaurès, F-93123 La Courneuve (FR)**
Inventeur: **Sanzey, Emile, 1 à 5, Avenue Jean-Jaurès, F-93123 La Courneuve (FR)**
Inventeur: **Vironneau, Pierre, 44, Chemin de la Flambère, F-31300 Toulouse (FR)**

(74) Mandataire: **Fort, Jacques et al, CABINET PLASSERAUD 84, rue d'Amsterdam, F-75009 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention a pour objet une installation de fourniture d'eau chaude du type comprenant un circuit thermodynamique parcouru par un fluide frigorigène en phases liquide et vapeur, comportant successivement un groupe compresseur, un condensateur d'échange de chaleur avec une source chaude de transfert de chaleur à un circuit d'eau chaude, un détendeur et un évaporateur à échange thermique avec un circuit de fluide caloporteur non solidifiable d'une source froide qui comporte un échangeur solaire de chauffage du fluide caloporteur, un volant thermique étant assuré par la chaleur latente de solidification d'une masse d'eau contenue dans un bac de stockage.

Le document FR-A-2 439 954 décrit une installation de ce type dans laquelle les moyens d'échange entre caloporteur et masse d'eau comportent un échangeur immergé dans la masse d'eau. Cette disposition conduit à une prise en masse de l'eau à l'état de glace en période de froid rigoureux, ce qui crée des problèmes de dégivrage, de garantie de fonctionnement et de durée de retour à un coefficient de performance élevé.

On a également proposé une installation à capteurs solaires utilisant l'effet de serre pour chauffer l'eau qui circule dans des échangeurs (DE-A-2 649 872), destinée à fournir de l'eau chaude et à fabriquer le plus possible de glace pendant l'hiver pour la réutiliser pendant l'été. Cette installation utilise, pour dégivrer les échangeurs, la technique classique du fonctionnement en cycle inverse. Cela implique d'intervenir sur le cycle thermodynamique, ce qui présente de nombreux inconvénients. Et, pour conserver un fonctionnement permanent, il est nécessaire de fractionner en deux la majeure partie de l'installation, l'une des parties continuant à fonctionner en pompe à chaleur tandis que l'autre est en cours de dégivrage.

On connait encore (GB-A-6 255 215) une pompe à chaleur utilisant la chaleur latente de solidification de l'eau et dans laquelle on forme de la glace sur des surfaces d'échange. La glace est chassée vers une trémie et l'eau de fusion revient à un bac de stockage. Mais il y a en permanence fabrication de glace et l'échangeur est en permanence à une température proche de 0°C; le coefficient de performance de l'installation est toujours proche de 1.

Enfin, le document FR-A-2 439 371 décrit une pompe à chaleur comportant un échangeur de sur-refroidissement intermédiaire permettant d'améliorer les performances.

La présente invention vise à fournir une installation de fourniture d'eau chaude répondant mieux que celles antérieurement connues aux exigences de la pratique, notamment en ce qu'elle permet de maintenir un coefficient de performance nettement supérieur à l'unité, d'éviter les aléas du chauffage solaire, et d'effectuer le dégivrage à partir de chaleur empruntée à la source chaude, sans aucune intervention sur le cycle thermodynamique, qui est simplement arrêté.

Dans ce but, l'invention propose une installation du type ci-dessus défini, caractérisée:

en ce que l'évaporateur est intégré à des moyens d'échange de chaleur placés au-dessus du bac de stockage et associés à une pompe pour prélever de l'eau dans la masse d'eau et l'envoyer à une rampe d'aspersion des moyens d'échange, de sorte que de la glace se forme sur ces moyens quand l'apport d'énergie solaire devient insuffisant,

en ce que des moyens sont prévus pour faire circuler dans lesdits moyens d'échange de chaleur un fluide puisant de la chaleur à la source chaude de l'installation alors que le circuit thermodynamique est à l'arrêt, pour fondre la glace au contact desdits moyens d'échange de chaleur et provoquer sa chute dans le bac,

et en ce que le circuit thermodynamique comprend un sous-refroidisseur placé en aval du condenseur et en amont du détendeur, associé à une boucle de réchauffage de fluide.

Les documents cités ne suggèrent pas cette constitution qui implique des moyens d'échange de chaleur prévus pour faire intervenir trois fluides et assurer:

– en fonctionnement normal, l'échange thermique entre le fréon et l'eau de ruissellement d'une part, entre le fréon et l'eau glycolée du circuit solaire d'autre part.

– lors du dégivrage, l'échange thermique entre l'eau glycolée chaude et la glace au contact des moyens d'échange.

L'invention apporte encore un avantage supplémentaire: grâce à l'apport thermique fourni par l'énergie solaire, qui est transmis pour partie à l'eau qui s'écoule dans le bac, on peut accélérer la fonte de la glace elle-même dans ce bac.

L'invention sera mieux comprise à la lecture de la description qui suit d'installations qui en constituent des modes particuliers de réalisation, donnés à titre d'examples non limitatifs. La description se réfère aux dessins qui l'accompagnent, dans lesquels:

– la Figure 1 est un schéma de principe montrant les composants principaux d'une installation;

– la Figure 2 est un schéma, plus détaillé que celui de la Figure 1, montrant une réalisation réelle possible de l'installation schématisée en Figure 1.

– la Figure 3, similaire à la Figure 2, montre une variante de réalisation qui porte pour l'essentiel sur la conception de l'échangeur évaporateur.

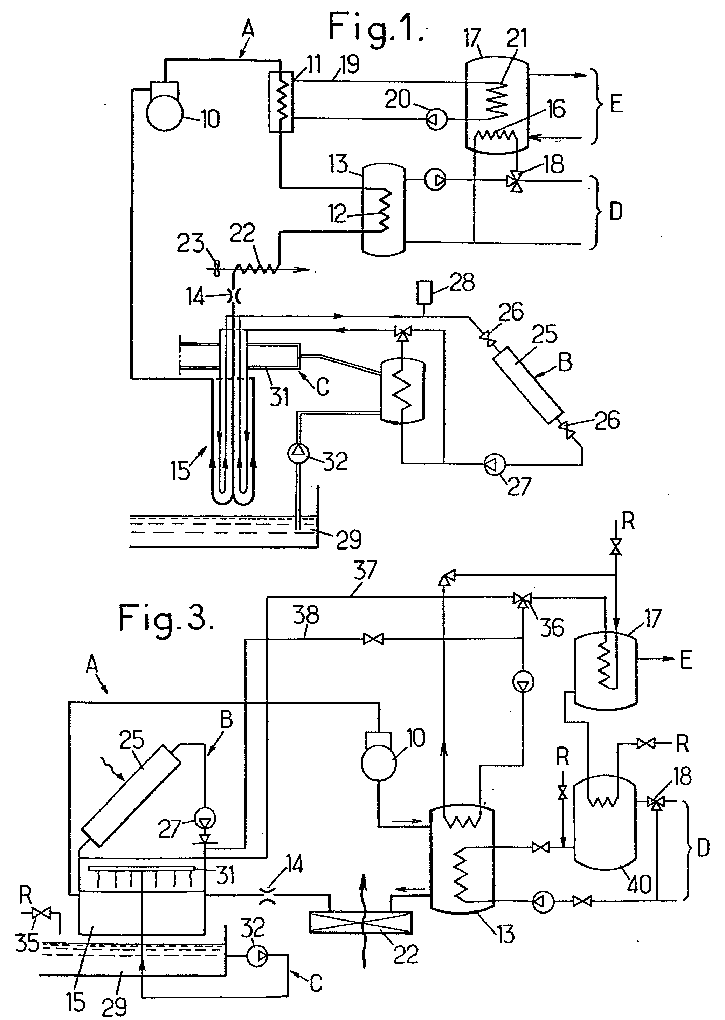

Pour plus de clarté, les différents circuits de l'installation montrés en figure 1 sont représentés par des traits d'épaisseur différente. Ces trois circuits, qu'on peut qualifier de circuit thermodynamique A, circuit solaire B et circuit hydraulique intermédiaire C, seront successivement décrits.

Le circuit thermodynamique A comprend, dans le sens de circulation du fluide thermodynamique qui sera généralement constitué par un fluide fluoré du genre connu sous la marque «FREON», un groupe compresseur 10, un échangeur désurchauffeur 11, le faisceau 12 d'un condenseur 13, un détendeur 14 et un échangeur évaporateur 15. Le condenseur 13 et l'échangeur évaporateur 15 fonctionnent par échange thermique, respectivement avec une source chaude et une source froide.

Dans le mode de réalisation illustré, la source chaude peut être constituée soit par un circuit D d'eau de chauffage, soit par un faisceau 16 de chauffage d'un ballon 17 appartenant à un circuit E d'eau chaude sanitaire. Une vanne à trois voies 18 permet de brancher le condenseur 13 soit sur le circuit D d'eau de chauffage (fonctionnement d'hiver), soit sur le faisceau 16 de production d'eau chaude sanitaire (fonctionnement d'été). Dans tous les cas, une boucle intermédiaire 19 munie d'un circulateur 20 permet de transférer les calories du désurchauffeur 11 à un serpentin 21 immergé dans le ballon 17 du circuit d'eau chaude; suivant une variante, le ballon 17 peut être, à volume égal, de faible diamètre et grande hauteur de manière à réaliser une ségrégation thermique qui permet de faire fonctionner en thermosiphon la boucle 19, donc de supprimer le circulateur 20.

L'installation montrée sur la figure 1 comporte de plus un échangeur à ailettes 22 associé à un ventilateur 23 de circulation d'air et interposé entre le condenseur 13 et le détendeur 14. Il permet de fournir de l'air chaud de ventilation de locaux à partir d'air froid prélevé à l'extérieur, du moins lors du fonctionnement d'hiver.

Le circuit solaire B comprend un échangeur 25 ou, plus généralement, une batterie d'échangeurs munis chacun de vannes d'isolement 26, un circulateur 27 et un échangeur qui, dans le cas illustré en figure 1, est intégré à l'évaporateur 15. L'échangeur solaire, qui n'est pas un chapteur solaire à effet de serre, ne comporte aucun vitrage ou isolation. Il récupère l'énergie du rayonnement solaire, et la chaleur sensible de l'air ambiant lorsqu'il fonctionne au-dessous de la température ambiante. Le circuit solaire B est rempli d'un fluide choisi pour rester en phase liquide dans toutes les conditions de fonctionnement. En règle générale, on utilisera un mélange d'eau et d'un antigel tel que l'éthylène-glycol. Un vase d'expansion 28 est prévu sur le circuit, étant donné que le liquide fonctionnera dans une gamme de températures importantes.

L'échangeur évaporateur 15 est disposé au-dessus du bac de stockage 29, suivant une configuration de «fabrication de glace». Le circuit hydraulique intermédiaire C constitue circuit de recharge thermique du bac 29. Il est parcouru par de l'eau et permet d'accumuler de l'énergie solaire en utilisant la chaleur latente du changement d'état eau-glace. Le circuit C comprend une pompe 32 qui puise l'eau dans un bac de réception 29 et l'envoie vers une rampe d'arrosage 31 d'où l'eau ruisselle sur l'échangeur et retombe vers le bac.

Les pompes, circulateurs et électrovannes du circuit sont associés à un système de commande (non représenté) de façon que le fonctionnement s'effectue comme suit:

– Lorsque la température du fluide caloporteur qui parcourt le circuit B est supérieure à 0 °C, la pompe 27 fonctionne en permanence. La pompe 32 amène de l'eau du bac 29 à la rampe 31 d'où elle ruisselle sur l'échangeur évaporateur 15 et revient au bac 29. La pompe 32 fonctionne pour autant que la température de l'eau du bac 29 est au-dessous de celle du fluide caloporteur. Il y a donc accumulation d'énergie solaire sous forme d'échauffement de la masse d'eau dans le bac 29.

– Dès que le fluide caloporteur qui parcourt le circuit B atteint une température de 0 °C, la pompe 32 s'arrête automatiquement. La marche de la pompe 27 est asservie à la marche du compresseur 10, aussi longtemps que la température du fluide caloporteur du circuit B correspond à un coefficient de performance supérieur à un seuil prédéterminé, égal à 2,5 par exemple.

– Dès que la température du fluide dans le circuit B descend au-dessous de ce seuil, la pompe 27 est arrêtée. La pompe 32 est par contre mise en marche et son fonctionnement est asservi à celui du compresseur 10. L'eau déversée par la rampe 31 se transforme alors partiellement en glace.

– Enfin, lorsque la pression d'évaporation du circuit thermodynamique A atteint la valeur minimale correspondant au coefficient de performance minimal choisi à l'avance, un système de dégivrage cyclique est mis en action. Ce système peut utiliser plusieurs sources possibles de calories, par exemple le volant thermique constitué par l'eau du ballon 17.

Si, avant qu'un dégivrage ne devienne nécessaire, le circuit B fournit de nouveau du caloporteur à une température supérieure à 0 °C, par suite d'un renouveau d'ensoleillement, le fonctionnement normal reprend et provoque, sans opération particulière de dégivrage, la fusion de la glace au contact de l'échangeur évaporateur, le film d'eau ainsi formé entraînant la chute de la glace dans le bac 29. La glace recueillie dans le bac 29 fond progressivement dès que le fluide caloporteur du circuit B s'échauffe et apporte la chaleur à l'échangeur évaporateur et à l'eau de ruissellement.

A titre d'exemple, on peut indiquer que les valeurs numériques suivantes ont été choisies pour une installation domestique de chauffage et de production d'eau chaude.

– Le circuit thermodynamique A est prévu de façon que les températures limites du fluide fluoré soient les suivantes: température de vapeur saturante à l'évaporateur 15, de – 10 °C à + 10 °C; température de vapeur saturante à la condensation, de + 25 °C à + 55 °C.

– Le circuit solaire est prévu pour que la température de son fluide caloporteur, constitué par de l'eau glycolée, puisse varier de – 20 °C à + 60 °C.

– La température de l'eau de chauffage disponible dans le circuit D doit être comprise entre 20 °C et 50 °C.

– La température de l'eau sanitaire dans le circuit E doit être maintenue à 50 °C à la sortie du ballon 17 dans les limites d'un tirage de 100 litres à un débit de 100 litres/mn, compatible pratiquement avec une température d'eau de ville comprise entre + 5 °C et + 15 °C.

Le système de commande non représenté commandera généralement de plus le circuit D d'eau de chauffage et régulera la température de distribution de cette eau en fonction de la température extérieure, généralement suivant une loi linéaire.

Une telle installation s'est révélée de nature à fournir dans tous les cas un coefficient de performance au moins égal à 2,5.

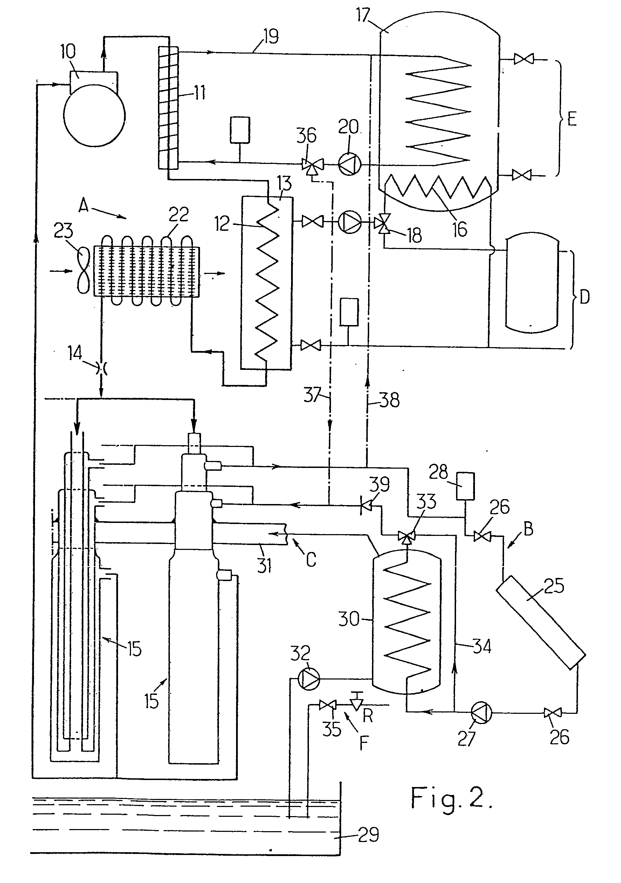

La figure 2 montre, toujours de façon schématique, la constitution complète d'une installation du genre déjà décrit en faisant référence à la figure 1 et montée suivant la configuration «fabrication de glace». Les organes de la figure 2 correspondant à ceux de la figure 1 sont désignés par le même numéro de référence; il ne seront pas décrits de nouveau.

Le circuit thermodynamique A présente une constitution similaire à celle montrée en figure 1, mais comporte plusieurs échangeurs évaporateurs 15 constitués par des tubes concentriques montés en parallèle et placés au-dessus du bac 29 de façon ne pas plonger dans la masse d'eau. Le groupe 10 est avantageusement constitué de plusieurs motocompresseurs montés sur des circuits thermodynamiques indépendants, ayant la même puissance ou mieux, s'ils sont au nombre de deux, ayant respectivement des puissances égales à $^1/_3$ et $^2/_3$ de la puissance totale. On peut ainsi adapter la puissance électrique fournie aux besoins du chauffage. Les compresseurs sont d'un type dont le moteur électrique d'entraînement est refroidi par les gaz aspirés. L'échangeur désurchauffeur 11 peut être de constitution classique. Le condenseur pourra être du type multitubulaire hélicoïdal, imposant au fluide thermodynamique une perte de charge inférieure à 0,15 bar. Ce condenseur devra être isolé pour limiter les pertes thermiques. Le détendeur 14 sera du type thermostatique, avec limitation de pression correspondant à la température d'évaporation la plus élevée (une plage représentative de températures d'évaporation étant − 15 °C à + 12 °C). Les échangeurs évaporateur 15 pourront être construits en tubes de cuivre et prévus pour imposer au fluide frigorigène du circuit thermodynamique A une perte de charge très faible, typiquement inférieure à 0,08 bar, et une perte de charge sur les circuits hydrauliques inférieure à 2 m de colonne d'eau.

La boucle intermédiaire 19, qui permet d'éviter l'échange direct entre fluide frigorigène du circuit A et eau sanitaire du circuit E, pourra être parcourue par le même liquide que celui qui constitue le caloporteur dans le circuit solaire B.

La figure 2 montre, encore, un circuit d'eau d'appoint F à partir du réseau R d'eau de ville, comportant une vanne 35 qui amène de l'eau de ville supplémentaire dans le bac 29 dès que la capacité maximale de stockage de glace est atteinte. L'ouverture de cette vanne 35 est commandée par un système de détection du volume de glace, non représenté.

La figure 2 montre encore l'un des modes de réalisation possibles du système de dégivrage dont doit être équipée l'installation. Ce système comprend une vanne à trois voies 36 permettant de dériver le liquide qui parcourt la boucle intermédiaire 19 vers les échangeurs évaporateurs 15. Lorsque la vanne 36 est amenée dans la position de dégivrage, le liquide qui a parcouru le ballon 17 ne traverse plus l'échangeur désurchauffeur 11, mais suit un circuit comprenant la vanne 36, une conduite de dérivation 37, le circuit de liquide caloporteur des échangeurs évaporateurs 15 et une seconde conduite de dérivation 38. Un clapet anti-retour 39 empêche le liquide de revenir vers le circuit B.

L'installation montrée schématiquement en figure 3 (où les organes correspondant à ceux déjà décrits sont désignés par le même numéro de référence) se différencie essentiellement de la précédente en ce que les échangeurs évaporateurs montés en parallèle sont plans et fabriqués suivant la technique «Roll-Bond» consistant à laminer quatre feuilles d'aluminium ensemble de manière à imbriquer les circuits thermodynamique A et solaire B. Le circuit B amène les calories recueillies par les échangeurs solaires 25 à un échangeur, encore intégré à l'évaporateur 15, disposé au-dessus du bac de stockage d'eau 29. Le circuit C comporte une pompe 32 de relevage qui alimente une rampe de ruissellement 31 disposée à la partie supérieure des éléments constituant l'échangeur évaporateur 15.

La figure 3 correspond à un montage tel que plusieurs compresseurs peuvent être montés sur le même circuit thermodynamique.

On retrouve sur le schéma de la figure 3, un circuit de dégivrage permettant de faire circuler du fluide chaud provenant du circuit de chauffage de l'eau chaude sanitaire 17 dans l'échangeur évaporateur 15, par l'intermédiaire de conduites 37 et 38 et d'une vanne à trois voies 36.

Enfin, l'installation comporte un ballon-tampon 40 de stockage de l'eau de chauffage.

Le fonctionnement de cette installation est similaire à celui décrit en faisant référence aux figures 1 et 2. A la sortie du compresseur 10, les gaz chauds traversent successivement un échangeur désurchauffeur de réchauffage d'un circuit intermédiaire, puis un condenseur 13 où ils se condensent. Le liquide chaud sortant du condenseur 13 est refroidi, avant détente dans le détendeur 14, dans un échangeur 22 qui réchauffe l'air de renouvellement des locaux, par exemple depuis − 7 °C jusqu'à une température supérieure à + 30 °C. Grâce à ce refroidissement du liquide frigorigène chaud à la sortie du condenseur, on peut amener le coefficient de performance minimal à une valeur de 2,5, et souvent même de 3. Suivant une variante, les éléments plans de l'échangeur évaporateur peuvent être cintrés suivant des cylindres.

L'installation peut être réalisée sous forme d'un ensemble monobloc de production de chaleur, comprenant l'ensemble du circuit thermodynamique, auquel se raccordent simplement les ballons et les échangeurs solaires.

Dans le mode de réalisation montré en figures 4 et 5, les moyens d'échange de chaleur sont dissociés de l'évaporateur. Pour faciliter la compréhension, les organes des figures 4 et 5 qui correspondent à ceux déjà représentés en figures 1 à 3, sont désignés par le même numéro de référence. Sur les figures, le circuit thermodynamique A parcouru par le fluide frigorigène est dessiné en traits épais et le circuit hydraulique intermédiaire C, servant à la recharge thermique du bac de stockage, est indiqué par des traits doubles.

Le circuit thermodynamique A comprend encore, dans le sens de circulation du fluide thermodynamique ou frigorigène, un groupe compresseur 10 à deux compresseurs parallèles, un échangeur-désurchauffeur 11, un condenseur 13 constituant réserve de liquide thermodynamique chaud, un détendeur 14 et un évaporateur 15b. Le condenseur 13 et l'évaporateur 15b fonctionnent par échange thermique, respectivement avec une source chaude constituée par un faisceau plongé dans le condenseur 13, et avec une source froide.

L'installation représentée comporte encore un échangeur 22 associé à un ventilateur 23 de circulation d'air et interposé entre le condenseur 13 et le détendeur 14, permettant de fournir l'hiver de l'air chaud de ventilation de locaux, à partir d'air froid prélevé à l'extérieur.

**Revendications**

1. Installation de fourniture d'eau chaude comprenant un circuit thermodynamique parcouru par un fluide frigorigène en phases liquide et vapeur, comportant successivement un groupe compresseur (10), un condenseur (13) d'échange de chaleur avec une source chaude de transfert de chaleur à un circuit d'eau chaude, un détendeur (14) et un évaporateur à échange thermique avec un circuit de fluide caloporteur non solidifiable d'une source froide qui comporte un échangeur solaire (25) de chauffage du fluide caloporteur, un volant thermique étant assuré par la chaleur latente de solidification d'une masse d'eau contenue dans un bac de stockage (29),

caractérisée en ce que l'évaporateur est intégré à des moyens d'échange de chaleur (15) placés au-dessus du bac de stockage (29) et associés à une pompe (32) pour prélever de l'eau dans la masse d'eau et l'envoyer à une rampe d'aspersion des moyens d'échange, de sorte que de la glace se forme sur ces moyens quand l'apport d'énergie solaire devient insuffisant,

en ce que des moyens sont prévus pour faire circuler dans lesdits moyens d'échange de chaleur un fluide puisant de la chaleur à la source chaude de l'installation, alors que le circuit thermodynamique est à l'arrêt, pour fondre la glace au contact desdits moyens d'échange de chaleur et provoquer sa chute dans le bac,

et en ce que le circuit thermodynamique comprend un sous-refroidisseur (22) placé en aval du condenseur et en amont du détendeur, associé à une boucle de réchauffage de fluide.

2. Installation suivant la revendication 1, caractérisée en ce que le circuit thermodynamique comprend un désurchauffeur-condenseur (11), en amont du premier condenseur ou constituant ce dernier.

3. Installation suivant la revendication 2, caractérisée en ce que ledit désurchauffeur est associé à une boucle hydraulique intermédiaire (19) de réchauffage d'eau qui contient un fluide de même nature que le fluide caloporteur qui parcourt l'échangeur solaire (25), tel qu'un mélange d'eau et d'antigel.

4. Installation suivant la revendication 1, 2 ou 3, caractérisée en ce que les éléments de l'évaporateur sont constitués de cylindres concentriques.

5. Installation suivant l'une quelconque des revendications précédentes, caractérisée en ce qu'un échangeur (22) de chauffage d'air est placé sur le circuit du fluide frigorigène, immédiatement en amont du détendeur (14).

6. Installation suivant l'une quelconque des revendications précédentes, caractérisée en ce que le groupe compresseur (10) comprend plusieurs compresseurs associés chacun à un circuit thermodynamique distinct ou commun, la puissance cumulée des compresseurs correspondant à la puissance maximale à fournir par l'installation.

**Claims**

1. A hot water supply apparatus comprising a thermodynamic circuit for a cooling fluid in liquid and vapor phases, comprising a cascaded arrangement of a compressor unit (10), a condensor (13) for heat exchange with a high temperature source for heat transfer to a hot water circuit, expansion means (14) and an evaporator for heat exchange with a circuit for a non-freezing heat transfer fluid associated with a low temperature source which has a solar energy exchanger (25) for heating the heat transfer fluid, a thermal buffer being provided by the latent freezing heat of a water body contained in a storage tank (29), characterized in that the evaporator is integrated to heat exchange means (15), located above the storage tank (29) and associated with a pump (32) for taking water from the water body and sending it to a pipe for sprinkling the exchange means, whereby ice is formed on said means when there is insufficient solar energy, in that means are provided for circulating a fluid which removes heat from the high temperature source of the apparatus within said heat exchange means, while the thermodynamic circuit is at rest, for melting ice which is in contact with said heat exchange means and for causing fall of the ice into the tank, and in that the thermodynamic circuit has a subcooler (22) located downstream of the condenser and upstream of the expansion means, associated with a fluid reheating loop.

2. Apparatus according to claim 1, characterized in that the thermodynamic circuit has a de-overheater-condenser (11) located upstream of the first condenser or constituting the latter.

3. Apparatus according to claim 2, characterized in that the de-overheater is associated with an intermediary hydraulic loop (19) for reheating water, which has a fluid of the same nature as the heat transfer fluid which flows within the solar energy exchanger (25), such as a water/anti-freeze mixture.

4. Apparatus according to claim 1, 2 or 3, characterized in that the elements of the evaporator consist of concentric cylinders.

5. Apparatus according to any one of the preceding claims, characterized in that an exchanger (22) for air heating is located on the circuit of the heat transfer fluid, immediately upstream of the expansion means (14).

6. Apparatus according to any one of the preceding claims, characterized in that the compressor unit (10) has a plurality of compressors each associated with a thermodynamic circuit which is distinct or common, the cumulated powers of the compressors corresponding to the maximum power to be delivered by the apparatus.

## Patentansprüche

1. Anlage zur Lieferung von Heisswasser mit einem thermodynamischen Kreis, der von einem Kältefluid in flüssigen und dampfförmigen Phasen durchströmt wird, aufeinanderfolgend enthaltend: eine Kompressorgruppe (10), einen Kondensator (13) für den Wärmeaustausch mit einer heissen Quelle für den Wärmeübergang zu einem Heisswasserkreis, einem Druckminderer (14) und einem Verdampfer mit Wärmeaustausch mit einem Kreis aus nicht erstarrendem Kühlfluid einer kalten Quelle, die einen Solaraustauscher (25) zur Erhitzung des Kühlfluids aufweist, wobei ein thermisches Schwungrad gewährleistet ist durch die latente Erstarrungswärme einer in einem Speicherbecken (29) enthaltenen Wassermasse, dadurch gekennzeichnet, dass der Verdampfer mit einer Wärmetauscheinrichtung (15) integriert ist, die sich über einem Speicherbecken (29) befindet und mit einer Pumpe (32) verbunden ist, die das in der Wassermasse enthaltene Wasser entnimmt und zu einer Berieselungsrampe der Tauscheinrichtung schickt, so dass sich unter dieser Einrichtung Eis bildet, wenn die Zufuhr an Sonnenenergie ungenügend wird, dass eine Einrichtung vorgesehen ist, die in der Wärmetauscheinrichtung ein Fluid zirkulieren lässt, das an der warmen Quelle der Anlage Wärme entnimmt, während der thermodynamische Kreis stillsteht, um das mit der Wärmetauscheinrichtung in Berührung stehende Eis zu schmelzen und das Herabfallen in das Becken zu bewirken, und dass der thermodynamische Kreis eine Unterkühleinrichtung (22) aufweist, die stromab des Kondensators und stromauf des Druckminderers angeordnet ist, der mit einer Schleife für das Erhitzen von Fluid verbunden ist.

2. Anlage nach Anspruch 1, dadurch gekennzeichnet, dass der thermodynamische Kreis einen Heissdampfkühler-Kondensator (11) aufweist, der stromauf des ersten Kondensators angeordnet ist oder diesen bildet.

3. Anlage nach Anspruch 2, dadurch gekennzeichnet, dass der Heissdampfkühler mit einer hydraulischen Zwischenschleife (19) zur Wassererhitzung verbunden ist, die ein Fluid derselben Art wie das Kühlfluid enthält, das den Solaraustauscher (25) durchströmt, etwa ein Gemisch aus Wasser und Frostschutzmittel.

4. Anlage nach Anspruch 1, 2 oder 3, dadurch gekennzeichnet, dass die Elemente des Verdampfers aus konzentrischen Zylinder bestehen.

5. Anlage nach einem der vorhergehenden Ansprüche, dadurch gekennzeichnet, dass ein Tauscher (22) für die Lufterhitzung im Kreis des kalten Fluids unmittelbar stromauf des Druckminderers (14) angeordnet ist.

6. Anlage nach einem der vorhergehenden Ansprüche, dadurch gekennzeichnet, dass die Kompressorgruppe (10) mehrere Kompressoren umfasst, von denen jeder mit einem gesonderten oder gemeinsamen thermodynamischen Kreis verbunden ist, wobei die summierte Leistung der Kompressoren der durch die Anlage gelieferten maximalen Leistung entspricht.

0 042 795

Fig.1.

Fig.3.

7

Fig. 2.